# EUROPÄISCHE PATENTSCHRIFT

(11) **EP 4 462 072 B1**
(45) Veröffentlichungstag und Bekanntmachung des Hinweises auf die Patenterteilung: **25.06.2025**
(21) Anmeldenummer: 23172870.0
(22) Anmeldetag: 11.05.2023
(51) Int. Cl.: G01B 11/06, G01B 11/08

(54) **MESSVORRICHTUNG UND VERFAHREN ZUM MESSEN EINES GEOMETRIEPARAMETERS EINES GEGENSTANDS**
MEASURING DEVICE AND METHOD FOR MEASURING A GEOMETRY PARAMETER OF AN OBJECT
DISPOSITIF DE MESURE ET PROCÉDÉ DE MESURE D'UN PARAMÈTRE GÉOMÉTRIQUE D'UN OBJET

(43) Veröffentlichungstag der Anmeldung: 13.11.2024
(73) Patentinhaber: SIKORA AG, 28307 Bremen (DE)
(72) Erfinder: Frank, Christian, 28211 Bremen (DE); Schuh, Kilja Tobias, 28307 Bremen (DE); Sikora, Harald, 28537 Bremen (DE)
(74) Vertreter: Hauck Patent- und Rechtsanwälte PartmbB

(56) Entgegenhaltungen:
- WO-A1-2016/139155
- DE-A1- 102016 119 728
- DE-B3- 102022 100 650

## Beschreibung

Die Erfindung betrifft eine Messvorrichtung zum Messen eines Geometrieparameters, insbesondere eines Innen- und/oder Außendurchmessers und/oder einer Wanddicke, eines flachen oder strangförmigen, insbesondere rohrförmigen, Gegenstands, umfassend einen Transceiver mit einer Sendeeinrichtung zum Aussenden von Terahertzstrahlung auf den Gegenstand, wobei die Terahertzstrahlung zumindest teilweise von dem Gegenstand reflektiert wird, und mit einer Empfangseinrichtung zum Empfangen der von der Sendeeinrichtung auf den Gegenstand ausgesandten Terahertzstrahlung, wobei die Messvorrichtung eine für eine Bedienperson tragbare Messvorrichtung ist.

Die Erfindung betrifft außerdem ein Verfahren zum Messen eines Geometrieparameters, insbesondere eines Innen- und/oder Außendurchmessers und/oder einer Wanddicke eines flachen oder strangförmigen, insbesondere rohrförmigen, Gegenstands.

Beispielsweise bei der Herstellung von Kunststoffrohren in Extrusionslinien besteht der Wunsch, Geometrieparameter, wie beispielsweise Wanddicken und Innen- oder Außendurchmesser flexibel, frühzeitig und an verschiedenen Orten der Produktionslinie messen zu können. Hierzu sind aus dem Stand der Technik Terahertzmessvorrichtungen bekannt, die Terahertzstrahlung auf den Gegenstand aussenden und von dem Gegenstand reflektierte Terahertzstrahlung empfangen. Beispielsweise auf Grundlage von Laufzeitmessungen können Geometrieparameter, wie Wanddicken oder Durchmesser, bestimmt werden.

Für eine flexible und schnelle Messung von Geometrieparametern an unterschiedlichen Orten einer Produktionslinie sind durch eine Bedienperson tragbare Handheld-Geräte hilfreich. Ein tragbares Gerät ist aus DE 10 2016 119 728 A1 bekannt. Es weist eine Auflagekontur mit mehreren Anlagepunkten zum Anlegen des Geräts an dem zu vermessenden Gegenstand auf. Mit dem bekannten tragbaren Gerät kann zum Beispiel die geometrische Wanddicke bestimmt werden, wenn der Brechungsindex des Materials des Gegenstands als bekannt angenommen wird.

Für häufig verwendeten Kunststoffe, wie zum Beispiel PE, PP, HDPE, PVDF, PTFE, PVC etc. in Reinform sind für Standardbedingungen verlässliche Brechungsindexwerte bekannt. Grundsätzlich ist der Brechungsindex abhängig von der Temperatur des Materials, von seinem Aggregatzustand und damit von seiner Dichte, aber auch von der genutzten Frequenz. Darüber hinaus werden in der Praxis den Kunststoffen jedoch regelmäßig Additive zugesetzt, beispielsweise für einen besseren Schutz gegen UV-Strahlung oder zum Erreichen antistatischer Eigenschaften. Additive verändern den Brechungsindex und die Zugabe von Additiven unterliegt häufig Schwankungen durch unregelmäßige Beimischungen oder durch schwankende Anteile der Additive in den gelieferten Kunststoffen. Die Anforderungen an die Messung von Geometrieparametern solcher Rohre sind in der Norm DIN EN ISO 3126 festgelegt. Die geforderte Messgenauigkeit ist anspruchsvoll. Eine Veränderung des Brechungsindex aufgrund zugesetzter Additive kann eine Wanddickenmessung mit der bekannten tragbaren Vorrichtung bei als konstant angenommenem Brechungsindex erheblich verfälschen. Für verlässliche Messwerte bezüglich der Wanddicke eines Kunststoffs ist es deshalb dringend geraten, den Brechungsindex direkt am Messort einer Wanddicke zu erfassen, um diesen in die Berechnung der geometrischen Wanddicke einfließen zu lassen.

Um den Brechungsindex zu bestimmen bzw. um eine erste Terahertzmesseinrichtung in Bezug auf den Brechungsindex zu kalibrieren, wird in DE 10 2022 100 650 B3 vorgeschlagen, an einem bereits abgekühlten Rohrstück eine Wanddickenmessung mit einer mechanischen Tastmesseinrichtung durchzuführen, mit der eine das abgekühlte Rohrstück messende zweite Terahertzmesseinrichtung kalibriert wird. Mit dieser wiederum wird die erste Terahertzmesseinrichtung kalibriert. Auf diese Weise kann zwar der individuelle Brechungsindex des zu vermessenden Gegenstands am Messort bestimmt werden und es können entsprechend genaue Geometrieparameter bestimmt werden. Das Vorgehen zum Kalibrieren ist allerdings sehr zeitaufwendig, beträgt doch die Laufzeit zwischen der ersten Messung und den endgültigen Messungen am erkalteten Rohr durchaus eine oder mehrere Stunden. Letztlich liefert dieses Verfahren lediglich einen Wert für den Brechungsindex, wie er am ersten Messort vorliegt, also im sogenannten Heißbereich, in dem der Kunststoff nur teilweise erstarrt ist. Neben dem Anteil an Additiven im Kunststoff wirken sich auch dessen Temperatur, die Dichte und der Aggregatzustand des Materials auf den Wert des Brechungsindex aus.

Ausgehend von dem erläuterten Stand der Technik liegt der Erfindung die Aufgabe zugrunde, eine Messvorrichtung und ein Verfahren der eingangs genannten Art bereitzustellen, mit denen in flexibler und zuverlässiger Weise Geometrieparameter an unterschiedlichen Orten des Gegenstands bestimmt werden können.

Die Erfindung löst die Aufgabe durch die unabhängigen Ansprüche 1 und 21. Vorteilhafte Ausgestaltungen finden sich in den abhängigen Ansprüchen, der Beschreibung und den Figuren.

Für eine Messvorrichtung der eingangs genannten Art löst die Erfindung die Aufgabe dadurch, dass die Messvorrichtung eine Halterung aufweist, die einerseits den Transceiver trägt und andererseits einen Reflektor zum Reflektieren der von der Sendeeinrichtung ausgesandten Terahertzstrahlung nach Durchstrahlen zumindest eines Abschnitts des Gegenstands, wobei die Halterung derart ausgebildet ist, dass die Messvorrichtung zum Messen des Geometrieparameters des Gegenstands derart an den Gegenstand ansetzbar ist, dass der Transceiver und der Reflektor einander auf unterschiedlichen Seiten des Gegenstands oder einer Wand des Gegenstands gegenüberliegen.

Der zu vermessende Gegenstand kann zum Beispiel zylindrisch oder rohrförmig sein. Es kann sich auch um einen flachen bzw. planen Gegenstand handeln. Er ist für die von der Sendeeinrichtung ausgesandte Terahertzstrahlung zumindest teiltransparent, so dass auf den Gegenstand ausgesandte Terahertzstrahlung an Grenzflächen des Gegenstands reflektiert wird. Ein Teil der Terahertzstrahlung kann den Gegenstand durchstrahlen und nach Reflektion an dem Reflektor zu der Empfangseinrichtung zurück gelangen, wo diese Strahlung ebenso wie die von dem Gegenstand reflektierten Strahlungsanteile als Messsignale empfangen werden. Die Sendeeinrichtung und die Empfangseinrichtung sind in einen Transceiver integriert ausgebildet und befinden sich insbesondere am selben Ort. Der Gegenstand kann aus einem Kunststoffmaterial bestehen. Lediglich beispielhaft genannt seien PE, PP, HDPE, PTFE, PVDF und PVC. Der Gegenstand kann aber beispielsweise auch aus Glas oder Keramik oder gefrorenem Wasser oder Holz oder Baustoffen verschiedenster Art bestehen, solange er für die verwendete Terahertzstrahlung zumindest teiltransparent ist. Die Terahertzstrahlung kann zum Beispiel Strahlung aussenden in einem Frequenzbereich von 1 GHz bis 6 THz, insbesondere in einem Frequenzbereich von 10 GHz bis 1,5 THz. Der Gegenstand kann in Längsrichtung durch einen Messbereich der Messvorrichtung befördert werden. Er kann zum Beispiel in einer Extrusionsvorrichtung hergestellt worden sein und zum Beispiel noch in der Extrusionslinie mit der erfindungsgemäßen Messvorrichtung bzw. dem erfindungsgemäßen Verfahren vermessen werden. Der Gegenstand kann zum Zeitpunkt des Messens mit der erfindungsgemäßen Messvorrichtung bzw. dem erfindungsgemäßen Verfahren noch fließfähige Anteile umfassen, also noch nicht vollständig erkaltet bzw. erstarrt sein. Dies gilt insbesondere bei einem Messen kurz nach Austritt aus der Extrusionsvorrichtung oder eines ersten Kühltanks der Extrusionslinie. Die Sendeeinrichtung kann FMCW Terahertzstrahlung aussenden, insbesondere breitbandige Terahertzstrahlung.

Wie bereits erläutert, empfängt die Empfangseinrichtung die von der Sendeeinrichtung ausgesandte und von dem Gegenstand zumindest teilweise reflektierte Terahertzstrahlung. Wie ebenfalls bereits erläutert, kann die Empfangseinrichtung auch Terahertzstrahlung empfangen, die den Gegenstand durchstrahlt hat. Die erfindungsgemäße Messvorrichtung ist für eine Bedienperson tragbar, insbesondere während der Messung. Es handelt sich also um ein Handheld-Gerät. Die Messvorrichtung hat vorzugsweise eine eigene Energieversorgung für elektrische Energie, insbesondere eine Batterie, vorzugsweise eine wiederaufladbare Batterie. In an sich bekannter Weise kann die Empfangseinrichtung zum Beispiel anhand von Laufzeitmessungen der an unterschiedlichen Grenzschichten des Gegenstands reflektierten Terahertzstrahlung Geometrieparameter des Gegenstands, wie zum Beispiel eine Wanddicke und/oder einen Innen- und/oder Außendurchmesser bestimmen und die Ergebnisse auf einem Display anzeigen. Hierzu kann die Messvorrichtung eine entsprechende Auswerteeinrichtung umfassen, wie nachfolgend noch näher erläutert.

Erfindungsgemäß weist die Messvorrichtung eine Halterung auf, die einerseits den Transceiver trägt und andererseits einen Reflektor zum Reflektieren der von der Sendeeinrichtung ausgesandten Terahertzstrahlung nach Durchstrahlen zumindest eines Abschnitts des Gegenstands. Die Halterung ist derart ausgebildet, dass die Messvorrichtung für einen Messvorgang so an den Gegenstand ansetzbar ist, dass der Transceiver und der Reflektor einander auf unterschiedlichen Seiten des Gegenstands oder auf unterschiedlichen Seiten einer Wand des Gegenstands gegenüberliegen. Von der Sendeeinrichtung ausgesandte Terahertzstrahlung wird entsprechend nach Durchstrahlen des Gegenstands oder der Wand des Gegenstands von dem Reflektor reflektiert, so dass die Terahertzstrahlung nach erneutem Durchstrahlen des Gegenstands oder der Wand des Gegenstands zurück zu dem Transceiver, insbesondere der Empfangseinrichtung gelangt, wo diese Strahlung als Messsignal detektiert wird. Wie unten noch näher erläutert, ist es auf diese Weise möglich, den individuellen Brechungsindex des Materials des gerade an gleicher Stelle vermessenen Gegenstands zu bestimmen und damit auch bei einer wechselnden bzw. nicht hinreichend genau bekannten Zusammensetzung des Gegenstands, beispielsweise aufgrund von Zugabe von Additiven, zuverlässige und präzise Messwerte des jeweiligen Geometrieparameters zu bestimmen. Gleichzeitig kann durch die Ausgestaltung der tragbaren Messvorrichtung mit der Halterung eine Messung an weitgehend beliebigen Orten des Gegenstands bzw. einer Produktionslinie für den Gegenstand, durch eine Bedienperson durchgeführt werden. Die Messergebnisse sind zuverlässig und stehen schnell zur Verfügung. Auch wenn stationär angeordnete Messvorrichtungen möglicherweise kontinuierlich Messergebnisse liefern können, kann mit der erfindungsgemäßen tragbaren Messvorrichtung sehr flexibel ein verlässliches Messergebnis erreicht werden. Durch die erfindungsgemäße Ausgestaltung mit der Halterung sowie dem Transceiver und dem Reflektor können in einem Messschritt der Brechungsindex und hierauf basierende Messergebnisse des Geometrieparameters erzielt werden. Auch eine verlässliche Dokumentation zur Abnahme des Gegenstands im Rahmen einer Produktionslinie ist so möglich.

Im Gegensatz zu dem eingangs erläuterten Handheld-Gerät des Standes der Technik ist die erfindungsgemäße Messvorrichtung nicht darauf angewiesen, den Brechungsindex des Gegenstands als bekannt vorauszusetzen. Vielmehr wird der genaue Wert des Brechungsindex des Gegenstands direkt am Messort selbst erfasst und in die Berechnung der Messwerte für den Geometrieparameter einbezogen. Damit können die Anforderungen, die in der Norm DIN EN ISO 3126 gestellt werden, vollumfänglich erfüllt werden.

Sofern der Transceiver und der Reflektor im an den Gegenstand angesetzten Zustand einander auf unterschiedlichen Seiten einer Wand des Gegenstands gegenüberliegen, kann die Messvorrichtung beispielsweise an das Ende eines rohrförmigen Gegenstands angesetzt werden, beispielsweise im Anschluss an die Produktion, also unmittelbar vor als auch nach dem Ablängen des rohrförmigen Gegenstands. Der Reflektor oder der Transceiver ist dann im Inneren des rohrförmigen Gegenstands angeordnet, während der jeweils andere von Reflektor oder Transceiver gegenüberliegend auf der Außenseite des rohrförmigen Gegenstands angeordnet ist. Erfindungsgemäß können als Geometrieparameter neben Wanddicken und Durchmessern auch beispielsweise Ovalitäten eines rohrförmigen Gegenstands während der Produktion oder auch im Anschluss an die Produktion zuverlässig bestimmt werden, indem zum Beispiel der Innen- oder Außendurchmesser mehrfach über den Umfang des Gegenstands gemessen wird. Hierzu kann die Messvorrichtung als Ganzes oder beispielsweise nur der Transceiver bei feststehendem Reflektor um eine Längsachse zum Beispiel eines rohrförmigen Gegenstands gedreht werden. Für die Drehung kann die Messvorrichtung einen Drehantrieb umfassen. Durch eine Messung über den Umfang des Gegenstands können neben Wanddickenschwankungen zum Beispiel auch Inhomogenitäten im Material des Gegenstands erkannt werden, zum Beispiel eine über den Umfang des Gegenstands inhomogene Verteilung von Additiven. Auch könnte durch die Messvorrichtung eine durch den Gegenstand verursachte Absorption der Terahertzstrahlung erfasst werden, zum Beispiel durch einen Vergleich der ausgesandten und nach Reflektion an dem Reflektor zurückerhaltenen Terahertzstrahlung. Auf diese Weise ist die tragbare Messvorrichtung auch gut geeignet zu prüfen, ob der Gegenstad bzw. ein Material des Gegenstands in der erfindungsgemäßen Weise messbar ist und gegebenenfalls bis zu welcher Dicke.

Grundsätzlich sollte die tragbare Messvorrichtung geeignet sein zur Messung kleiner und großer Gegenstände und gegebenenfalls auch bei geringen Abständen zur Oberfläche des Gegenstands. Die Antenne des Transceivers sollte entsprechend einen hohen Gewinn von vorzugsweise 20 bis 30 dBi besitzen und eine mit den einhergehenden Amplituden ausreichende Empfindlichkeit aufweisen. Um eine Übersteuerung des Empfangssignals zu vermeiden, kann eine Regelung der Sendeleistung sinnvoll sein, die eine Anpassung an die jeweilige Situation der Empfangssignale ermöglicht. Eine ausreichend schnelle Steuerung ist dann sinnvoll, beispielsweise um einen Messvorgang mit unterschiedlicher Sendeleistung, angepasst an eine vordere und eine rückwärtige Wanddicke zum Beispiel eines Rohrs vornehmen zu können.

Gemäß einer besonders praxisgemäßen Ausgestaltung kann die Halterung C-förmig ausgebildet sein. Der Transceiver und der Reflektor können dann an den gegenüberliegenden freien Enden der C-förmigen Halterung angeordnet sein. Ein solche C-förmige Halterung kann beispielsweise aus Kunststoff bestehen, zum Beispiel einem kohlefaserverstärkten Kunststoff. Sofern eine C-förmige oder bogenförmige Halterung der Messvorrichtung eine ausreichende Größe aufweist, können der Transceiver und der Reflektor beispielsweise beim Vermessen eines rohrförmigen Gegenstands auf gegenüberliegenden Außenseiten des Gegenstands positioniert werden.

Die Halterung kann einen Anschlag bilden, der zum Ansetzen der Messvorrichtung an eine Stirnseite des Gegenstands ansetzbar ist. Auf diese Weise wird eine definierte Position der Messvorrichtung in Bezug auf den Gegenstand, insbesondere eine Stirnseite eines flachen Gegenstands oder eines bereits abgelängten Rohrs zur Verfügung gestellt. Beispielsweise beim Messen der Wanddicke von Rohren ist ein bestimmter Abstand von der Schnittkante des Rohres regelmäßig vorgeschrieben, beispielsweise mindestens 50 mm. An den Schnittkanten selbst liegen wegen frei gewordenen Spannungen im Material oftmals keine verlässlichen Werte der Wanddicke vor. Der vorgeschriebene Abstand zur Schnittkante kann mit der vorgenannten Ausgestaltung jederzeit sichergestellt werden. Dies gilt auch beispielsweise bei einem Messen der Wanddicke über den Umfang eines Rohrs.

Um eine Einstellbarkeit des Abstands von einer Kante, zum Beispiel einer Schnittkante, des Gegenstands zur Anpassung an unterschiedliche Vorschriften oder Gegebenheiten zu ermöglichen, kann nach einer weiteren Ausgestaltung vorgesehen sein, dass der Transceiver und/oder der Reflektor längsverschiebbar an der Halterung gelagert ist, insbesondere in Längsrichtung des Gegenstands im an den Gegenstand angesetzten Zustand.

Nach einer weiteren Ausgestaltung kann der Transceiver und/oder der Reflektor lösbar an der Halterung angeordnet sein. Auf diese Weise ist eine Messung mit der Messvorrichtung je nach Bedarf mit oder ohne Reflektor möglich. Eine Messung ohne Reflektor ist beispielsweise sinnvoll, wenn der Brechungsindex des Materials des Gegenstands auch ohne entsprechende Messung ausreichend sicher bekannt ist. Auch eine Kombination der Messvorrichtung mit einem zum Beispiel stationär an einer Produktionslinie des Gegenstands, zum Beispiel einer Extrusionslinie eines rohrförmigen Gegenstands, angeordneten Reflektor ist dann möglich. Ein solcher stationärer Reflektor könnte zum Beispiel am Beginn einer Extrusionslinie für den Gegenstand angeordnet sein, zum Beispiel am Ausgang eines ersten Kühltanks, in dem der Gegenstand nach Austritt aus der Extrusionsvorrichtung eine erste Abkühlung erfährt. Wenn beispielsweise der stationär angeordnete Reflektor darüber hinaus eine Aufnahme für den Transceiver der Messvorrichtung oder die Halterung der Messvorrichtung aufweist, wäre auf diese Weise eine präzise Ausrichtung zum Messen jederzeit gewährleistet. Eine besonders einfache Anbringung eines Reflektors in Kombination mit einer Halterung für einen Transceiver, zum Beispiel direkt am Ausgang eines ersten Kühltanks bzw. vor Einlauf in einen weiteren Kühltank bzw. zwischen weiteren Kühltanks der Produktionslinie, lässt sich so realisieren und sichert eine hohe Wiederholgenauigkeit für die Messstrecke zwischen dem Transceiver und dem Reflektor. Damit ist eine genaue Messung im Warmbereich der Produktionslinie, wenn also der Gegenstand noch fließfähige Anteile aufweist und entsprechend noch einer gewissen Schrumpfung und einem Sagging unterliegt, möglich. In diesem Warmbereich werden zwar Messergebnisse erzielt, die von den endgültigen Geometrieparametern des vollständig verfestigten Gegenstands abweichen können.

Sie können aber eine wichtige Einrichtungshilfe für die Produktionslinie sein insbesondere bezüglich der Voreinstellung einer Extrusionsvorrichtung hinsichtlich der Wanddicke und des noch zu erwartenden Saggings. Derzeit ist es in dem Warmbereich üblich, die äußere Abmessung des Durchmessers eines rohrförmigen Gegenstands mithilfe eines Bandmaßgerätes mechanisch zu vermessen. Die Erfindung erlaubt an dieser Stelle eine einfache berührungslose Erfassung mit der Messvorrichtung. Mit Kenntnis des Außendurchmessers zum Beispiel eines rohrförmigen Gegenstands und der Messung des Innendurchmessers mithilfe der erfindungsgemäßen Messvorrichtung kann die doppelte Wanddicke des rohrförmigen Gegenstands ermittelt werden und es können individuelle geometrische Wanddickenwerte aus den erfassten optischen Wanddickenwerten sowohl front- als auch rückseitig bestimmt werden. Auch ein Lösen des Transceivers von der Halterung kann sinnvoll sein, beispielsweise zum Aufladen einer Batterie des Transceivers oder zum Wechsel auf einen anderen Transceiver o. ä. Auch eine klappbare Ausgestaltung beispielsweise des Reflektors ist denkbar, um diesen zwar noch an der Halterung gehalten, aber wahlweise in den Messweg eingeklappt oder aus diesem herausgeklappt nutzen zu können.

Eine lösbare Ausgestaltung des Transceivers an der Halterung hat auch den Vorteil, dass der Transceiver mit unterschiedlichen Halterungen, je nach Anwendungszweck, kombiniert werden kann. Entsprechend kann die Messvorrichtung auch mehrere in der erfindungsgemäßen Weise ausgestaltete Halterungen umfassen, die für unterschiedliche Einsatzzwecke optimiert sind. Auch erlaubt die lösbare Anordnung des Reflektors an der Halterung eine einfache, aber präzise und leicht zu handhabende Arretierung des Reflektors. Für die präzise Bestimmung der geometrischen Abmessungen, der Wanddicke, der Wanddicken- und/oder Durchmesserwerte ist eine exakte Bestimmung des Brechungsindex von Bedeutung, nämlich die Erfassung der Laufzeitunterschiede zwischen einer Direktbestrahlung des Reflektors und dessen Bestrahlung nach der laufzeitverlängernden Durchstrahlung von Materialen. Das bedeutet, dass zwischen dem Kalibrieren des Abstands des Reflektors und dessen praktischer Nutzung keine Abstandsveränderungen, im Bereich von einigen Mikrometern, stattfinden dürfen. Bei einem Brechungsindex von typisch 1,5 für Kunststoffe und etwa 2 für Glas bedeutet es, dass jede Abstandsänderung des Reflektors bei Kunststoffen etwa zu einem Drittel in den Wanddickenwert eingeht, bei Glas etwa zur Hälfte. Damit ist eine präzise Anordnung von Transceiver und Reflektor von besonderer Bedeutung.

Nach einer weiteren Ausgestaltung kann der Reflektor im an den Gegenstand angesetzten Zustand der Messvorrichtung von einer dem Reflektor benachbarten, von der Terahertzstrahlung durchstrahlten Wand des Gegenstands beabstandet sein. Zwischen dem Reflektor und dem zu vermessenden Abschnitt des Gegenstands, beispielsweise der Wand des Gegenstands, besteht also ein gewisser Abstand. Auf diese Weise können Echos des Reflektors und der beabstandeten Oberfläche, beispielsweise einer Innenwand eines rohrförmigen Gegenstands, im Messsignal zuverlässig getrennt werden.

Die Halterung kann weiterhin mindestens eine Auflage umfassen, mit der der Transceiver und/oder der Reflektor im an den Gegenstand angesetzten Zustand auf einer Oberfläche des Gegenstands aufliegt. Durch eine solche Auflage wird eine definierte Anlage bzw. Position des Transceivers und/oder des Reflektors in Bezug auf den zu vermessenden Gegenstand gewährleistet. Die mindestens eine Aufnahme kann zum Beispiel mindestens eine Führungs- bzw. Gleitkufe umfassen. Auch möglich ist beispielsweise, dass die mindestens eine Auflage mindestens eine im an den Gegenstand angesetzten Zustand auf der Oberfläche des Gegenstands aufliegende Führungsrolle umfasst. Die mindestens eine Auflage kann zur Anpassung an unterschiedliche Abmessungen des Gegenstands verstellbar sein. Beispielsweise kann die mindestens eine Auflage mindestens zwei zueinander beabstandete Auflageabschnitte umfassen, die gegen eine Vorspannung auseinandergedrückt werden können. Die Vorspannung kann beispielsweise durch eine Vorspannfeder bereitgestellt werden. Eine Anpassung der mindestens einen Auflage an unterschiedliche Abmessungen des Gegenstands kann manuell erfolgen. Es ist aber auch ein beispielsweise elektrischer Antrieb denkbar. Anstelle einer Vorspannung durch eine Vorspannfeder ist beispielsweise auch eine andere Konstruktion denkbar, zum Beispiel ein elastischer Zahnriemen mit nach außen gekehrten Zähnen. Eine besonders praxisgemäße Ausgestaltung in dieser Hinsicht kann zum Beispiel zwei zur Anpassung an unterschiedliche Abmessungen des Gegenstands anpassbare Auflageabschnitte umfassen, die zum Beispiel auf eine Außenseite des Gegenstands aufsetzbar sind und einen auf der gegenüberliegenden Seite angeordneten Auflageabschnitt zur Anlage an einer Innenseite des Gegenstands.

Es kann weiterhin mindestens ein Sensor vorgesehen sein, mit dem die Messvorrichtung mit der Halterung ohne Kontakt zu dem Gegenstand für einen Messvorgang ausgerichtet werden kann. Der mindestens eine Sensor kann zum Beispiel mindestens einen optischen Sensor und/oder mindestens einen Trägheitssensor und/oder mindestens einen Lagesensor umfassen. In diesem Fall kann die Messvorrichtung auch ohne mechanische Führung ausgerichtet werden, zum Beispiel nach optischer Ausrichtung mit drei oder vier Abstandssensoren, zum Beispiel Time of Flight Sensoren. Für die Messung selbst ist der Abstand zum Beispiel des Transceivers zu der Oberfläche des Gegenstands von untergeordneter Bedeutung. Wichtig ist allerdings eine möglichst vertikale Ausrichtung, also 90°, zur Messebene. Die Ausrichtung mit optischen Sensoren kann zum Beispiel erfolgen, indem optisch sichtbar ein Symbol, wie ein Fadenkreuz, auf einem Display oder dergleichen angezeigt wird mit einer manuellen Auslösung der Messung oder auch mit automatischer Erkennung und selbsttätiger Auslösung der Messung, wenn zum Beispiel eine vertikale Ausrichtung erreicht ist. Auch eine Ausrichtung über gyroskopische Sensoren oder über den Transceiver selbst wäre denkbar. Möglich ist auch, dass die Sendeeinrichtung bereits während des Ausrichtvorgangs sendet und bei Erkennen einer optimalen Ausrichtung, zum Beispiel durch entsprechende Trägheits- oder Lagesensoren, die entsprechenden von der Empfangseinrichtung empfangenen Messwerte verwendet. Auch kann bei Verwendung von Lagesensoren zum Beispiel eine Zuordnung der Messwerte zu unterschiedlichen Positionen am Umfang eines rohrförmigen Gegenstands erfolgen.

Der Reflektor kann nach einer weiteren Ausgestaltung die Form eines Zylinderabschnitts besitzen. Dies kann die Führung der Messvorrichtung erleichtern, insbesondere wenn die Zylinderform an die Geometrie eines rohrförmigen Gegenstands angepasst ist, insbesondere eine auf die Mittelachse eines rohrförmigen Gegenstands ausgerichteten Krümmung besitzt. Insbesondere in Verbindung mit der lösbaren Anordnung des Reflektors an der Halterung können unterschiedlich geformte Reflektoren, beispielsweise Reflektoren mit unterschiedlichen Zylinderradien, zum Einsatz kommen, insbesondere zur Anpassung an unterschiedlich große Gegenstände. Auf diese Weise können zum Beispiel auch Geometrieparameter von sehr kleinen Rohren zuverlässig gemessen werden.

Der Reflektor kann je nach Nutzung der Messvorrichtung genutzt werden, zum Beispiel zur Messung der Wanddicke am Rande eines Gegenstandes oder lediglich zur Erfassung des Brechungsindex des Materials für weitere Messungen des gleichen Gegenstands. Nach einer weiteren Ausgestaltung kann der Reflektor für die von der Sendeeinrichtung ausgesandte Terahertzstrahlung teiltransparent sein. In diesem Fall wird ein Teil der von der Sendeeinrichtung ausgesandten Terahertzstrahlung von dem Reflektor reflektiert, während ein anderer Teil den Reflektor durchstrahlt. Ein zu 100% reflektierender Reflektor ist von der Optik her bekannt als Ulbricht-Kugel. Für eine optimale Reflektion der gesendeten Hochfrequenz sollte dieser so geformt sein, dass sich sein Mittelpunkt im Bereich der Sende-/Empfangsantenne des Transceivers befindet. Das gilt auch für den erfindungsgemäßen Reflektor. Eine Ausrichtung der Krümmung des Reflektors auf den Mittelpunkt zum Beispiel eines Rohres wäre nur dann optimal, wenn auch die Antenne des Transceivers auf den Mittelpunkt des Rohres ausgerichtet wäre. Ein teilreflektierender Reflektor kann insbesondere sinnvoll sein, wenn bei einer Anordnung des Reflektors im Inneren eines rohrförmigen Gegenstands sowohl eine sich zwischen dem Transceiver und dem Reflektor befindende Wand des Gegenstands als auch eine auf einer dem Transceiver abgewandten Seite des Reflektors angeordnete Wand vermessen werden sollen. Durch Verwendung eines teiltransparenten Reflektors können dann einerseits der Brechungsindex des Materials des Gegenstands und andererseits die Wanddicke beider Wandabschnitte des rohrförmigen Gegenstands und gleichzeitig der Außen- und Innendurchmesser gemessen werden können. Auch denkbar wäre eine zweiteilige Ausgestaltung des Reflektors mit zwei zueinander symmetrisch angeordneten Reflektorabschnitten.

Auch möglich ist eine schmale Ausbildung des Reflektors, so dass ein Teil der von der Sendeeinrichtung ausgesandten Terahertzstrahlung auf den Reflektor trifft und von diesem reflektiert wird, und ein Teil der Terahertzstrahlung an dem Reflektor vorbeigelangt. In diesem Fall ist eine Bestimmung des Brechungsindex sowie eine Vermessung der Wanddicke und des Innen- und Außendurchmessers auch bei einem die Terahertzstrahlung vollständig reflektierenden Reflektor möglich. Es ist insbesondere vorteilhaft, den Reflektor mit einer entsprechend schmalen Kontur auszuführen, derart, dass ausreichendes Signal trotz der zu durchstrahlenden Wanddicke vom Reflektor zurück in den Transceiver gelangt und eine ausreichende Menge der Strahlung passieren kann, um auch die zweite Wanddicke eines Rohres zu durchleuchten und damit beide Wanddicken zu bestimmen, sowie den Innen- und Außendurchmesser eines Rohres. Für eine Handheld-Messvorrichtung ist es von praktischer Bedeutung, wenn ein Gerät klein und handlich ist und darüber hinaus geringe Ausmaße aufweist. Dies kann mit einem entsprechend schmalen Reflektor erreicht werden.

Die Halterung kann nach einer weiteren Ausgestaltung flexibel sein. Zum Beispiel wenn diese bogenförmig ausgebildet ist, kann hierdurch eine Anpassung an unterschiedliche Größen des Gegenstands erfolgen. Mögliche Materialien für die Halterung sind grundsätzlich Kunststoffe oder Metalle. Auch glasfaserverstärkte oder kohlenstofffaserverstärkte Kunststoffe könnten zum Einsatz kommen. Flexible Halterungen können insbesondere aus Kunststoff bestehen.

Die Messvorrichtung kann weiterhin einen stationär an einer Herstelleinrichtung zum Herstellen des Gegenstands anordenbaren bzw. angeordneten Halteabschnitt umfassen, an dem der Transceiver und/oder die Halterung lösbar befestigbar bzw. befestigt ist. Zum Beispiel kann der Halteabschnitt eine Bodenplatte umfassen, die auf dem Boden eines die Herstelleinrichtung aufnehmenden Produktionsraums aufstehen kann. Die Bodenplatte kann auf dem Boden befestigbar sein, zum Beispiel über eine Schraubverbindung oder ähnliches. Der Halteabschnitt kann einen Ständer bilden und stellt eine positionsgenaue Anordnung und gegebenenfalls Führung der Messvorrichtung über den Umfang des zu vermessenden Gegenstands sicher. Auf diese Weise kann zum Beispiel die Wanddicke über den Umfang und/oder ein Außen-und/oder Innendurchmesser und/oder eine Ovalität eines zum Beispiel rohrförmigen Gegenstands besonders präzise erfasst werden. Die Herstelleinrichtung kann eine Extrusionsvorrichtung umfassen, in der der Gegenstand mittels Extrusion hergestellt wird.

Die erfindungsgemäße Messvorrichtung kann weiterhin eine Auswerteeinrichtung umfassen, die dazu ausgebildet ist, auf Grundlage von der Empfangseinrichtung empfangenen Messwerten einen Geometrieparameter, insbesondere eine Wanddicke und/oder einen Innen- und/oder Außendurchmesser, des Gegenstands zu bestimmen. Wie eingangs erläutert, können die entsprechenden Geometrieparameter zum Beispiel auf Grundlage von Laufzeitmessungen bestimmt werden. Die Auswerteeinrichtung kann in den Transceiver integriert sein oder getrennt von diesem ausgebildet sein.

Auch kann der Transceiver eine Anzeigeeinrichtung für die erfassten Messwerte und den erfassten Brechungsindex aufweisen. Dadurch kann eine Bedienperson die entsprechenden Werte schnell und einfach ablesen. Sofern die Auswerteeinrichtung getrennt von dem Transceiver ausgebildet ist, kann diese zum Beispiel eine Ladestation für den Transceiver umfassen. Der Transceiver kann auch mit einer Netzwerk- oder Internet-Schnittstelle, zum Beispiel einer LAN-Schnittstelle ausgestattet sein. Auch ist es möglich, dass der Transceiver mit einer Power over Ethernet (PoE) Verbindung autonom betrieben werden kann. Es ist auch möglich, dass die Halterung mit einem LAN-Anschluss zu einer getrennt angeordneten Auswerteeinrichtung oder zu einem weiteren Messgerät ausgestattet sein, und/oder mit einer Spannungsversorgung für den Transceiver, zum Beispiel in Kombination mit einer Ladevorrichtung für eine Batterie der Messvorrichtung. Wie bereits erwähnt, kann die Spannungsversorgung über eine kombinierte Power over Ethernet Verbindung erfolgen. Zum Beispiel kann der Transceiver seine Messdaten an eine zentrale Auswerteeinheit oder eine andere zum Beispiel stationär an einer Extrusionslinie angeordnete Messeinrichtung senden. Dabei kann es sich zum Beispiel um eine Messeinrichtung handeln, die im Warmbereich der Extrusionslinie, also in geringer Entfernung von dem Extruder, angeordnet ist. Wie erläutert, weist der Gegenstand in diesem Warmbereich noch nicht erstarrte Bereiche auf.

Die Auswerteeinrichtung kann weiter dazu ausgebildet sein, den Brechungsindex des Gegenstands aus einem Vergleich der Laufzeit der von der Sendeeinrichtung ausgesandten und von der Empfangseinrichtung empfangenen Terahertzstrahlung bei Durchstrahlen des Gegenstands mit der Laufzeit der von der Sendeeinrichtung ausgesandten und von der Empfangseinrichtung empfangenen Terahertzstrahlung ohne Durchstrahlen des Gegenstands zu bestimmen. Eine solche Bestimmung des Brechungsindex ist beispielsweise in der WO 2016/139155 A1 erläutert und kann vorliegend eingesetzt werden.

Die Messvorrichtung kann weiterhin eine drahtlose Sendeeinrichtung zum Senden von durch die Empfangseinrichtung aufgenommenen Messwerten an eine von der Messvorrichtung getrennte Auswerteeinrichtung und/oder zum Senden von durch eine in die Messvorrichtung integrierte Auswerteeinrichtung ausgewerteten Daten an eine von der Messvorrichtung getrennte Steuereinrichtung umfassen. Die Messvorrichtung kann zum Beispiel mit einer WLAN-Datenübertragung ausgestattet sein. Zwischen Nutzungszeiten kann die Messvorrichtung bzw. der Transceiver zum Beispiel in einer Ladestation zum Aufladen einer Batterie der Messvorrichtung bzw. des Transceivers angeordnet sein. Die Ladestation kann optional zum Beispiel über eine drahtgebundene oder drahtlose Datenverbindung mit der Steuereinrichtung verbunden sein oder auch mit einer weiteren Messvorrichtung. Auf diese Weise kann eine entsprechende Dokumentation erfolgen. Außerdem können die von der Messvorrichtung aufgenommenen Messwerte für eine Steuerung zum Beispiel einer Produktionslinie für den Gegenstand, zum Beispiel einer Extrusionslinie mit einer Extrusionsvorrichtung, verwendet werden. Auch können die Messwerte verwendet werden um zum Beispiel Messwerte einer stationären Terahertzmessvorrichtung zum Bestimmen von Geometrieparametern des Gegenstands zu überprüfen bzw. zu korrigieren, insbesondere mit Blick auf eine noch zu erwartende Schrumpfung bzw. ein noch zu erwartendes Sagging des Gegenstands.

Die Auswerteeinrichtung kann eine speziell der Messvorrichtung zugeordnete Auswerteeinrichtung sein. Es ist aber auch möglich, dass es sich bei der Auswerteeinrichtung um eine zentrale Auswerteeinrichtung handelt, die weitere Aufgaben übernimmt, zum Beispiel eine Extrusionsvorrichtung auf Grundlage der Messergebnisse ansteuert und/oder einer weiteren Messeinrichtung zugeordnet ist und die Messergebnisse der Messvorrichtung und/oder die Messergebnisse der weiteren Messeinrichtung archiviert und/oder auf Grundlage der Messergebnisse der Messvorrichtung und/oder der Messergebnisse der weiteren Messeinrichtung zum Beispiel für eine Steuerung einer Extrusionsvorrichtung angesetzte Werte für eine Schrumpfung und/oder ein Sagging des Gegenstands korrigiert.

Grundsätzlich kann die erfindungsgemäße Messvorrichtung alle Funktionen umfassen, die nötig sind, um Gegenstände zu erfassen und das Ergebnis in Form einer optischen oder akustischen Signalgebung darzustellen, bzw. Gegenstände, Abmessungen o. ä. zu erfassen und die Ergebnisse auf einem Display anzuzeigen. Die Auswerteeinrichtung ist dabei nicht zwingend erforderlich, kann aber in vorteilhafter Weise genutzt werden, zum Beispiel wenn es darum geht, Messwerte zu registrieren, zu dokumentieren, zu nutzen oder um einen Prozess, z. B. bei der Herstellung von Rohren oder Platten, zu optimieren.

Die Erfindung betrifft auch ein System, umfassend eine erfindungsgemäße Messvorrichtung sowie den Gegenstand. Das System kann weiterhin eine Fördereinrichtung umfassen zum Fördern des Gegenstands in Längsrichtung durch einen Messbereich der Messvorrichtung. Das erfindungsgemäße System kann auch eine Herstelleinrichtung, zum Beispiel eine Extrusionsvorrichtung, zur Herstellung des Gegenstands umfassen.

Die Erfindung löst die Aufgabe weiterhin durch ein Verfahren zum Messen eines Geometrieparameters, insbesondere eines Innen- und/oder Außendurchmessers und/oder einer Wanddicke eines flachen oder strangförmigen, insbesondere rohrförmigen, Gegenstands unter Verwendung einer erfindungsgemäßen Messvorrichtung oder unter Verwendung eines erfindungsgemäßen Systems. Wie bereits erläutert, können erfindungsgemäß die Messwerte an unterschiedlichen Positionen zum Beispiel einer Produktionslinie, wie einer Extrusionslinie, für den Gegenstand erfasst werden. Neben Bereichen, in denen der Gegenstand seine endgültige Geometrie bereits erlangt hat, also insbesondere vollständig erkaltet bzw. erstarrt ist, zum Beispiel nach oder unmittelbar vor dem Ablängen eines in einer Extrusionsvorrichtung hergestellten Gegenstands, kann erfindungsgemäß insbesondere auch im Warmbereich der Produktionslinie gemessen werden, wenn also der Gegenstand noch fließfähige Anteile aufweist und eine Schrumpfung bzw. ein Sagging noch nicht abgeschlossen ist. Dies wurde eingangs erläutert. Durch die tragbare Ausgestaltung der Messvorrichtung mit den vorgenannten möglichen Ausgestaltungen ist eine zuverlässige Messung auch bei nicht als bekannt vorauszusetzendem Brechungsindex mit schnell verfügbaren Ergebnissen möglich.

Ausführungsbeispiele der Erfindung werden nachfolgend anhand von Figuren näher erläutert. Es zeigen schematisch:
- Figur 1: eine erfindungsgemäße Messvorrichtung nach einem ersten Ausführungsbeispiel in einer ersten Ansicht,
- Figur 2: die Messvorrichtung aus Figur 1 in einer gegenüber Figur 1 um 90° gedrehten Ansicht,
- Figur 3: eine erfindungsgemäße Messvorrichtung nach einem weiteren Ausführungsbeispiel in einer Ansicht entsprechend der Figur 1,
- Figur 4: die Messvorrichtung aus Figur 3 in einer gegenüber Figur 3 um 90° gedrehten Ansicht,
- Figur 5: eine erfindungsgemäße Messvorrichtung nach einem weiteren Ausführungsbeispiel in einer Ansicht entsprechend der Figur 4, und
- Figur 6: eine erfindungsgemäße Messvorrichtung nach einem weiteren Ausführungsbeispiel in einer Ansicht entsprechend der Figur 5.

Soweit nichts anderes angegeben ist, bezeichnen in den Figuren gleiche Bezugszeichen gleiche Gegenstände.

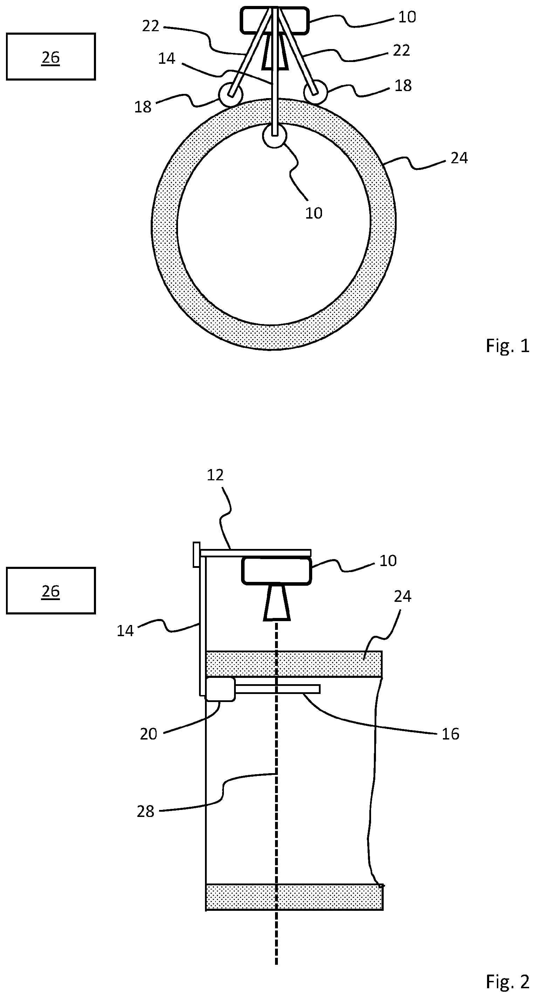

Die in den Figuren 1 und 2 dargestellte erfindungsgemäße Messvorrichtung umfasst einen Transceiver 10 mit einer Sendeeinrichtung zum Aussenden von Terahertzstrahlung und mit einer Empfangseinrichtung zum Empfangen der von der Sendeeinrichtung ausgesandten Terahertzstrahlung. Der Transceiver 10 ist im dargestellten Beispiel an einem Schenkel 12 einer C-förmigen Halterung 14 angeordnet, an deren dem Schenkel 12 gegenüberliegenden freien Ende ein Reflektor 16 angeordnet ist, der für die von der Sendeeinrichtung ausgesandte Terahertzstrahlung vorzugsweise teiltransparent ist, so dass er einen Teil der Terahertzstrahlung zurück zu dem Transceiver 10 und damit der Empfangseinrichtung reflektiert und einen Teil der Terahertzstrahlung durchlässt. Die Halterung 14 umfasst darüber hinaus zwei äußere Führungsrollen 18 und eine innere Führungsrolle 20. In Figur 2 sind die äußeren Führungsrollen 18 nicht dargestellt. Die äußeren Führungsrollen 18 sind jeweils an einem äußeren Ende eines Haltearms 22 angeordnet. Die Haltearme 22 bilden eine V-Form und können mit den Führungsrollen 18 gegen eine beispielsweise durch eine Vorspannfeder bereitgestellte Vorspannung auseinandergedrückt werden. Wie in den Figuren 1 und 2 dargestellt, kann die Messvorrichtung derart beispielsweise an einen rohrförmigen Gegenstand 24, insbesondere ein Kunststoffrohr 24, angesetzt werden, dass die äußeren Führungsrollen 18 auf der Außenseite des Kunststoffrohrs 24 anliegen und die innere Führungsrolle 20 auf der Innenseite des Kunststoffrohrs 24. Durch die Möglichkeit des Auseinanderdrückens der Führungsrollen 18 können diese an unterschiedliche Rohrabmessungen angepasst werden. Darüber hinaus bildet die Halterung 14, wie insbesondere in Figur 2 erkennbar, einen Anschlag, der zum Ansetzen der Messvorrichtung an eine Stirnseite des rohrförmigen Gegenstands 24 ansetzbar ist. Der Transceiver 10 kann an der Halterung 14, insbesondere dem Schenkel 12 längsverschiebbar gelagert sein, insbesondere in Längsrichtung des rohrförmigen Gegenstands 24, in Figur 2 also in waagerechter Richtung. Auch der Reflektor 16 kann an der Halterung 14 längsverschiebbar gelagert sein, sofern gewünscht. Auf diese Weise wird eine definierte Ausrichtung und Position der Messvorrichtung, insbesondere des Transceivers 10 und des Reflektors 16 in Bezug auf den zu vermessenden rohrförmigen Gegenstand 24 sichergestellt. Die Messvorrichtung umfasst außerdem eine Auswerteeinrichtung 26, die mit dem Transceiver 10 zum Beispiel über eine drahtlose Datenverbindung verbunden sein kann.

Im Betrieb sendet die Sendeeinrichtung des Transceivers 10 Terahertzstrahlung auf den zu vermessenden rohrförmigen Gegenstand 24 aus, in den Figuren 1 und 2 vertikal nach unten, wie in Figur 2 durch die gestrichelte Linie 28 veranschaulicht. Die Terahertzstrahlung wird an Grenzflächen des rohrförmigen Gegenstands 24, insbesondere den Außen- und Innenseiten der Wandabschnitte, sowie vollständig oder teilweise an dem Reflektor 16 reflektiert. Nach der Reflexion gelangt die Terahertzstrahlung zurück zu dem Transceiver 10 und wird von der Empfangseinrichtung als Messsignal detektiert. Beispielsweise aus Laufzeitmessungen kann die die Messwerte erhaltende Auswerteeinrichtung 26 die optische Dicke der Wandabschnitte des rohrförmigen Gegenstands 24 und damit den Außen- und Innendurchmesser des rohrförmigen Gegenstands 24 bestimmen. Um hieraus die geometrischen Werte der entsprechenden Geometrieparameter zu bestimmen, muss der Brechungsindex des Materials des rohrförmigen Gegenstands 24 berücksichtigt werden. Hierzu kann die Auswerteeinrichtung 26 den Brechungsindex des rohrförmigen Gegenstands 24 aus dem Vergleich der Laufzeit der von der Sendeeinrichtung ausgesandten und von der Empfangseinrichtung empfangenen Terahertzstrahlung bei Durchstrahlen des rohrförmigen Gegenstands 24 mit der Laufzeit der von der Sendeeinrichtung ausgesandten und von der Empfangseinrichtung empfangenen Terahertzstrahlung ohne Durchstrahlen des rohrförmigen Gegenstands 24 bestimmen, jeweils anhand der von dem Reflektor 16 reflektierten Terahertzstrahlung. Da die in den Figuren 1 und 2 gezeigte Messvorrichtung derart ausgebildet ist, dass der Reflektor 16 im Inneren des Kunststoffrohrs 24 angeordnet ist, ist eine Messung entsprechend von einer Stirnseite des Kunststoffrohrs 24 möglich, insbesondere nach einem Ablängen des Kunststoffrohrs 24 nach Herstellung zum Beispiel in einer Extrusionslinie.

Wie erläutert, kann die Auswerteeinrichtung 26 auch in den Transceiver 10 integriert sein. Eine Stromversorgung zum Laden zum Beispiel einer Batterie kann zum Beispiel getrennt von dem Transceiver ausgebildet sein. Wie ebenfalls erwähnt, muss der Reflektor 16 nicht teiltransparent sein.

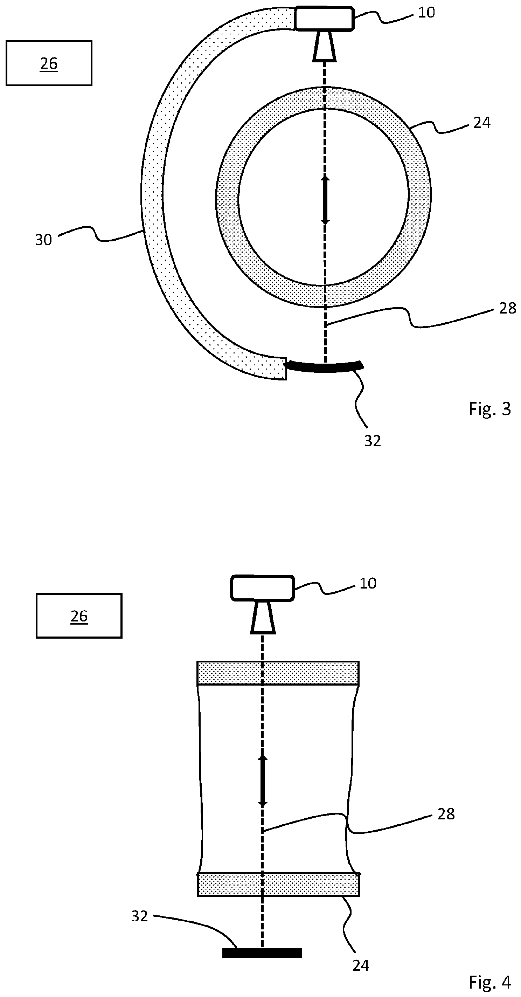

Figuren 3 und 4 zeigen ein weiteres Ausführungsbeispiel einer erfindungsgemäßen Messvorrichtung, mit der insbesondere auch ein noch nicht abgelängter rohrförmiger Gegenstand 24, insbesondere ein Kunststoffrohr 24 vermessen werden kann, insbesondere im Warmbereich kurz nach Austritt aus einer Extrusionsvorrichtung oder nach Austritt aus einem ersten Kühltank, wenn der rohrförmige Gegenstand 24 entsprechend noch fließfähige Anteile aufweist. Hierzu ist eine bogenförmige Halterung 30 vorgesehen, an deren einem freien Ende der Transceiver 10 der Messvorrichtung und an deren anderem freien Ende ein Reflektor 32 angeordnet ist, der im dargestellten Beispiel die Form eines Zylinderabschnitts in Anpassung an die Geometrie des rohrförmigen Gegenstands 24 besitzt. Die Halterung 30 kann zum Beispiel aus einem Kunststoff bestehen und flexibel sein. Sie erlaubt das Ansetzen an den rohrförmigen Gegenstand 24 von außen, wobei sich der Transceiver 10 und der Reflektor 32 auf gegenüberliegenden Außenseiten des rohrförmigen Gegenstands 24 befinden. Wie wiederum durch die gestrichelte Linie 28 veranschaulicht, wird von der Sendeeinrichtung des Transceivers 10 ausgesandte Terahertzstrahlung einerseits an Grenzflächen des rohrförmigen Gegenstands 24 reflektiert und andererseits an dem auf der gegenüberliegenden Seite des rohrförmigen Gegenstands 24 angeordneten Reflektor 32. Die jeweils reflektierten Strahlungsanteile gelangen zurück zu der Empfangseinrichtung und werden von dieser als Messwerte aufgenommen, die wiederum an die Auswerteeinrichtung 26 gegeben werden. Der Transceiver 10 kann auch ein Display zur Darstellung der Messwerte umfassen. Die Messvorrichtung bzw. die Auswerteeinrichtung 26 kann auf dieser Grundlage in der oben erläuterten Weise den Brechungsindex des Materials des den Brechungsindex des Materials des Kunststoffrohrs 24 und die Wanddicken sowie die Außen- und Innendurchmesser des rohrförmigen Gegenstands 24 bestimmen.

Wie erläutert, kann es sich bei der Auswerteeinrichtung 26 um eine speziell für die Messvorrichtung vorgesehene Auswerteeinrichtung 26 handeln. Es ist aber auch möglich, dass es sich bei der Auswerteeinrichtung 26 um eine zentrale Auswerteeinrichtung handelt, die zum Beispiel eine Extrusionsvorrichtung ansteuert und/oder einer weiteren Messeinrichtung zugeordnet ist, wie oben erläutert.

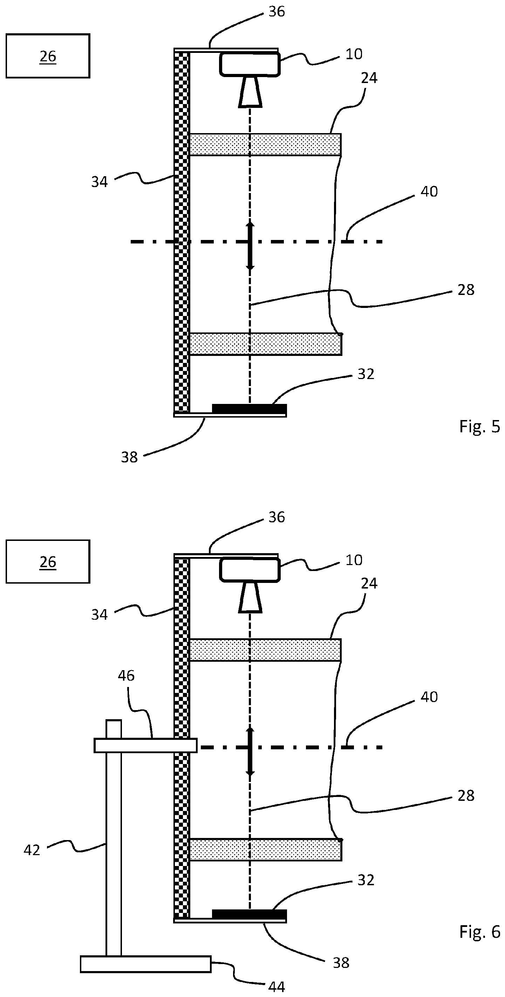

Figur 5 zeigt ein weiteres Ausführungsbeispiel einer erfindungsgemäßen Messvorrichtung, die sich von dem Ausführungsbeispiel nach den Figuren 3 und 4 hinsichtlich der Halterung 34 unterscheidet. Diese ist ähnlich der Halterung 14 in den Figuren 1 und 2 ausgeführt mit zwei gegenüberliegenden Schenkeln 36, 38. An dem Schenkel 36 ist der Transceiver 10 angeordnet und an dem Schenkel 38 der Reflektor 32, der eine Krümmung aufweisen kann wie der in den Figuren 3 und 4 gezeigte Reflektor 32. Die Halterung 34 kann in dem in Figur 5 gezeigten Ausführungsbeispiel an den Schenkeln 36, 38 angeordnete und im an dem rohrförmigen Gegenstand 24 angesetzten Zustand auf gegenüberliegenden Außenseiten des rohrförmigen Gegenstands 24 anliegende Führungsrollen aufweisen, die zum Beispiel ausgebildet sein können wie die Führungsrollen 18 des in den Figuren 1 und 2 dargestellten Ausführungsbeispiels. Damit ist eine definierte Position und Ausrichtung der Messvorrichtung, insbesondere des Transceivers 10 und des Reflektors 32 zu dem rohrförmigen Gegenstand 24 gewährleistet, beispielsweise auf die Mittelachse 40 des rohrförmigen Gegenstands 24. Wiederum bietet die Halterung 34 einen Anschlag zum Ansetzen an den rohrförmigen Gegenstand 24. Wiederum können der Transceiver 10 und/oder der Reflektor 32 längsverschiebbar in Richtung der Längsachse des rohrförmigen Gegenstands an der Halterung 34, insbesondere den Schenkeln 36 bzw. 38, angeordnet sein.

Die in Figur 6 gezeigte Messvorrichtung unterscheidet sich von der in Figur 5 gezeigten Messvorrichtung dadurch, dass weiterhin ein stationär an zum Beispiel einer Extrusionsvorrichtung zur Extrusion des rohrförmigen Gegenstands 24 angeordneter Halteabschnitt 42 vorgesehen ist. Der Halteabschnitt 42 umfasst eine Bodenplatte 44, die zum Beispiel auf dem Boden eines die Extrusionsvorrichtung aufnehmenden Produktionsraums befestigt, zum Beispiel verschraubt, sein kann. Über einen Querträger 46 kann die Halterung 34 an dem Halteabschnitt 42 angeordnet sein. Auf diese Weise ist eine positionsgenaue Anordnung der Messvorrichtung und eine sichere Führung der Messvorrichtung zum Beispiel bei einer Drehung um die Mittelachse 40 während der Messung gewährleistet.

Während die Erfindung anhand der Ausführungsbeispiele für einen rohrförmigen Gegenstand 24, insbesondere ein Kunststoffrohr 24, beschrieben wurde, versteht sich, dass sie in entsprechender Weise auch bei anderen Gegenständen, zum Beispiel flachen Gegenständen oder auch massiven zylindrischen Gegenständen zum Einsatz kommen kann. Auch ist es möglich, dass anstelle des in den Figuren 1 und 2 gezeigten schmalen, stabförmigen Reflektors 16 ebenfalls ein an die Rohrgeometrie angepasster Reflektor mit zum Beispiel der Form eines Zylinderabschnitts verwendet wird. In entsprechender Weise wäre auch bei den Ausführungsbeispielen nach den Figuren 3 bis 5 ein anders geformter Reflektor 32 möglich.

Bei allen Ausführungsbeispielen ist es darüber hinaus möglich, dass der Transceiver 10 und/oder der Reflektor 16, 32 lösbar an der Halterung 14, 30 bzw. 34 angeordnet ist. Dies erlaubt wahlweise eine Messung auch ohne Reflektor oder ein Abnehmen des Transceivers 10 zum Beispiel zum Aufladen einer Batterie oder zur Datenübertragung. Beispielsweise durch ein Abnehmen des Reflektors 16 bei dem Ausführungsbeispiel nach den Figuren 1 und 2 wäre bei bekanntem Brechungsindex des Materials des Kunststoffrohrs 24 auch eine Messung im noch nicht abgelängten Bereich des Kunststoffrohrs 24 bzw. auf einem plattenförmigen Gegenstand möglich. Der in Figur 6 gezeigte Halteabschnitt kann auch bei den Ausführungsbeispielen nach den Figuren 1 bis 4 vorgesehen sein.

### Bezugszeichenliste

- 10: Transceiver
- 12: Schenkel
- 14: Halterung
- 16: Reflektor
- 18: Äußere Führungsrollen
- 20: Innere Führungsrolle
- 22: Haltearme
- 24: Rohrförmiger Gegenstand
- 26: Auswerteeinrichtung
- 28: Linie
- 30: Halterung
- 32: Reflektor
- 34: Halterung
- 36: Schenkel
- 38: Schenkel
- 40: Mittelachse
- 42: Halteabschnitt
- 44: Bodenplatte
- 46: Querträger

## Patentansprüche

1. Messvorrichtung zum Messen eines Geometrieparameters, insbesondere eines Innen- und/oder Außendurchmessers und/oder einer Wanddicke, eines flachen oder strangförmigen, insbesondere rohrförmigen, Gegenstands (24), umfassend einen Transceiver (10) mit einer Sendeeinrichtung zum Aussenden von Terahertzstrahlung auf den Gegenstand, wobei die Terahertzstrahlung zumindest teilweise von dem Gegenstand (24) reflektiert wird, und mit einer Empfangseinrichtung zum Empfangen der von der Sendeeinrichtung auf den Gegenstand (24) ausgesandten Terahertzstrahlung, wobei die Messvorrichtung eine für eine Bedienperson tragbare Messvorrichtung ist,
**dadurch gekennzeichnet, dass** die Messvorrichtung eine Halterung (14, 30, 34) aufweist, die einerseits den Transceiver (10) trägt und andererseits einen Reflektor (16, 32) zum Reflektieren der von der Sendeeinrichtung ausgesandten Terahertzstrahlung nach Durchstrahlen zumindest eines Abschnitts des Gegenstands (24), wobei die Halterung (14, 30, 34) derart ausgebildet ist, dass die Messvorrichtung zum Messen des Geometrieparameters des Gegenstands (24) derart an den Gegenstand (24) ansetzbar ist, dass der Transceiver (10) und der Reflektor (16, 32) einander auf unterschiedlichen Seiten des Gegenstands (24) oder einer Wand des Gegenstands (24) gegenüberliegen.

2. Messvorrichtung nach einem der vorhergehenden Ansprüche, **dadurch gekennzeichnet, dass** die Halterung (14, 30, 34) C-förmig ausgebildet ist.

3. Messvorrichtung nach einem der vorhergehenden Ansprüche, **dadurch gekennzeichnet, dass** die Halterung (14, 30, 34) einen Anschlag bildet, der zum Ansetzen der Messvorrichtung an eine Stirnseite des Gegenstands (24) ansetzbar ist.

4. Messvorrichtung nach einem der vorhergehenden Ansprüche, **dadurch gekennzeichnet, dass** der Transceiver (10) und/oder der Reflektor (16, 32) längsverschiebbar an der Halterung (14, 30, 34) gelagert ist.

5. Messvorrichtung nach einem der vorhergehenden Ansprüche, **dadurch gekennzeichnet, dass** der Transceiver (10) und/oder der Reflektor (16, 32) lösbar an der Halterung (14, 30, 34) angeordnet ist.

6. Messvorrichtung nach einem der vorhergehenden Ansprüche, **dadurch gekennzeichnet, dass** der Reflektor (16, 32) im an den Gegenstand (24) angesetzten Zustand der Messvorrichtung von einer dem Reflektor (16, 32) benachbarten, von der Terahertzstrahlung durchstrahlten Wand des Gegenstands (24) beabstandet ist.

7. Messvorrichtung nach einem der vorhergehenden Ansprüche, **dadurch gekennzeichnet, dass** die Halterung (14, 30, 34) mindestens eine Auflage umfasst, mit der der Transceiver (10) und/oder der Reflektor (16, 32) im an den Gegenstand (24) angesetzten Zustand auf einer Oberfläche des Gegenstands (24) aufliegt.

8. Messvorrichtung nach Anspruch 7, **dadurch gekennzeichnet, dass** die mindestens eine Auflage mindestens eine im an den Gegenstand (24) angesetzten Zustand auf der Oberfläche des Gegenstands (24) aufliegende Führungsrolle (18, 20) umfasst.

9. Messvorrichtung nach einem der Ansprüche 7 oder 8, **dadurch gekennzeichnet, dass** die mindestens eine Auflage zur Anpassung an unterschiedliche Abmessungen des Gegenstands (24) verstellbar ist.

10. Messvorrichtung nach Anspruch 9, **dadurch gekennzeichnet, dass** die mindestens eine Auflage mindestens zwei zueinander beabstandete Auflageabschnitte umfassen, die gegen eine Vorspannung auseinandergedrückt werden können.

11. Messvorrichtung nach einem der vorhergehenden Ansprüche, **dadurch gekennzeichnet, dass** weiterhin mindestens ein Sensor vorgesehen ist, mit dem die Messvorrichtung mit der Halterung (14, 30, 34) ohne Kontakt zu dem Gegenstand (24) für einen Messvorgang ausgerichtet werden kann.

12. Messvorrichtung nach Anspruch 11, **dadurch gekennzeichnet, dass** der mindestens eine Sensor mindestens einen optischen Sensor und/oder mindestens einen Trägheitssensor und/oder mindestens einen Lagesensor umfasst.

13. Messvorrichtung nach einem der vorhergehenden Ansprüche, **dadurch gekennzeichnet, dass** der Reflektor (16, 32) die Form eines Zylinderabschnitts besitzt.

14. Messvorrichtung nach einem der vorhergehenden Ansprüche, **dadurch gekennzeichnet, dass** der Reflektor (16, 32) für die von der Sendeeinrichtung ausgesandte Terahertzstrahlung teiltransparent ist.

15. Messvorrichtung nach einem der vorhergehenden Ansprüche, **dadurch gekennzeichnet, dass** sie weiterhin einen stationär an einer Herstelleinrichtung zum Herstellen des Gegenstands anordenbaren Halteabschnitt (42) umfasst, an dem der Transceiver (10) und/oder die Halterung (14, 30, 34) lösbar befestigbar ist.

16. Messvorrichtung nach einem der vorhergehenden Ansprüche, **dadurch gekennzeichnet, dass** sie weiterhin eine Auswerteeinrichtung (26) umfasst, die dazu ausgebildet ist, auf Grundlage von von der Empfangseinrichtung empfangenen Messwerten einen Geometrieparameter, insbesondere eine Wanddicke und/oder einen Innen- und/oder Außendurchmesser, des Gegenstands (24) zu bestimmen.

17. Messvorrichtung nach Anspruch 16, **dadurch gekennzeichnet, dass** die Auswerteeinrichtung (26) weiter dazu ausgebildet ist, den Brechungsindex des Gegenstands (24) aus einem Vergleich der Laufzeit der von der Sendeeinrichtung ausgesandten und von der Empfangseinrichtung empfangenen Terahertzstrahlung bei Durchstrahlen des Gegenstands (24) mit der Laufzeit der von der Sendeeinrichtung ausgesandten und von der Empfangseinrichtung empfangenen Terahertzstrahlung ohne Durchstrahlen des Gegenstands (24) zu bestimmen.

18. Messvorrichtung nach einem der vorhergehenden Ansprüche, **dadurch gekennzeichnet, dass** die Messvorrichtung eine drahtlose Sendeeinrichtung zum Senden von durch die Empfangseinrichtung aufgenommenen Messwerten an eine von der Messvorrichtung getrennte Auswerteeinrichtung (26) und/oder zum Senden von durch eine in die Messvorrichtung integrierte Auswerteeinrichtung (26) ausgewerteten Daten an eine von der Messvorrichtung getrennte Steuereinrichtung umfasst.

19. System, umfassend eine Messvorrichtung nach einem der vorhergehenden Ansprüche und den Gegenstand (24).

20. System nach Anspruch 19, **dadurch gekennzeichnet, dass** es weiterhin eine Fördereinrichtung umfasst zum Fördern des Gegenstands (24) in Längsrichtung durch einen Messbereich der Messvorrichtung.

21. Verfahren zum Messen eines Geometrieparameters, insbesondere eines Innen- und/oder Außendurchmessers und/oder einer Wanddicke, eines flachen oder strangförmigen, insbesondere rohrförmigen, Gegenstands (24) unter Verwendung einer Messvorrichtung nach einem der Ansprüche 1 bis 18 oder unter Verwendung eines Systems nach einem der Ansprüche 19 oder 20.

## Claims

1. A measuring device for measuring a geometry parameter, in particular an inner and/or outer diameter and/or a wall thickness, of a flat or strand-shaped, in particular tubular, object (24), comprising a transceiver (10) having a transmission apparatus for emitting terahertz radiation onto the object, wherein the terahertz radiation is reflected at least in part by the object (24), and having a receiving apparatus for receiving the terahertz radiation emitted by the transmission apparatus onto the object (24), wherein the measuring device is a measuring device that can be worn by an operator,
**characterized in that** the measuring device has a holder (14, 30, 34) which, on one side, bears the transceiver (10) and, on the other side, a reflector (16, 32) for reflecting the terahertz radiation emitted by the transmission apparatus after it has passed through at least one portion of the object (24), wherein the holder (14, 30, 34) is designed such that the measuring device for measuring the geometry parameter of the object (24) can be placed against the object (24) in such a way that the transceiver (10) and the reflector (16, 32) oppose one another on different sides of the object (24) or a wall of the object (24).

2. The measuring device according to one of the preceding claims, **characterized in that** the holder (14, 30, 34) is C-shaped.

3. The measuring device according to one of the preceding claims, **characterized in that** the holder (14, 30, 34) forms a stop which can be placed against an end face of the object (24) in order to place the measuring device.

4. The measuring device according to one of the preceding claims, **characterized in that** the transceiver (10) and/or the reflector (16, 32) is mounted in a longitudinally displaceable manner on the holder (14, 30, 34).

5. The measuring device according to one of the preceding claims, **characterized in that** the transceiver (10) and/or the reflector (16, 32) is detachably arranged on the holder (14, 30, 34).

6. The measuring device according to one of the preceding claims, **characterized in that** the reflector (16, 32), in the state of the measuring device placed against the object (24), is spaced apart from a wall of the object (24) which is adjacent to the reflector (16, 32) and through which the terahertz radiation passes.

7. The measuring device according to one of the preceding claims, **characterized in that** the holder (14, 30, 34) comprises at least one support by means of which the transceiver (10) and/or the reflector (16, 32) rests on a surface of the object (24) in the state placed against the object (24).

8. The measuring device according to claim 7, **characterized in that** the at least one support comprises at least one guide roller (18, 20) that rests on the surface of the object (24) in the state placed against the object (24).

9. The measuring device according to one of claims 7 or 8, **characterized in that** the at least one support can be adjusted in order to adapt to different dimensions of the object (24).

10. The measuring device according to claim 9, **characterized in that** the at least one support comprises at least two support portions which are spaced apart from one another and which are pressed apart against a preload.

11. The measuring device according to one of the preceding claims, **characterized in that** at least one sensor is further provided by means of which the measuring device with the holder (14, 30, 34) can be aligned with the object (24) without contact for a measurement process.

12. The measuring device according to claim 11, **characterized in that** the at least one sensor comprises at least one optical sensor and/or at least one inertial sensor and/or at least one position sensor.

13. The measuring device according to one of the preceding claims, **characterized in that** the reflector (16, 32) has the shape of a cylindrical portion.

14. The measuring device according to one of the preceding claims, **characterized in that** the reflector (16, 32) is partially transparent to the terahertz radiation emitted by the transmission apparatus.

15. The measuring device according to one of the preceding claims, **characterized in that** it further comprises a holding portion (42) which can be arranged stationarily against a manufacturing apparatus for manufacturing the object and to which the transceiver (10) and/or the holder (14, 30, 34) can be detachably fastened.

16. The measuring device according to one of the preceding claims, **characterized in that** it further comprises an evaluation apparatus (26) which is designed to determine a geometry parameter, in particular a wall thickness and/or an inner and/or outer diameter, of the object (24) on the basis of measured values received by the receiving apparatus.

17. The measuring device according to claim 16, **characterized in that** the evaluation apparatus (26) is further designed to determine the refractive index of the object (24) from a comparison of the transit time of the terahertz radiation emitted by the transmission apparatus and received by the receiving apparatus when it passes through the object (24) with the transit time of the terahertz radiation emitted by the transmission apparatus and received by the receiving apparatus without passing through the object (24).

18. The measuring device according to one of the preceding claims, **characterized in that** the measuring device comprises a wireless transmission apparatus for transmitting measured values recorded by the receiving apparatus to an evaluation apparatus (26) that is separate from the measuring device and/or for transmitting data evaluated by an evaluation apparatus (26) integrated in the measuring device to a control apparatus that is separate from the measuring device.

19. A system, comprising a measuring device according to one of the preceding claims and the object (24).

20. The system according to claim 19, **characterized in that** it further comprises a conveying apparatus for conveying the object (24) in the longitudinal direction through a measuring region of the measuring device.

21. A method for measuring a geometry parameter, in particular an inner and/or outer diameter and/or a wall thickness, of a flat or strand-shaped, in particular tubular, object (24) using a measuring device according to one of claims 1 to 18 or using a system according to one of claims 19 or 20.

## Revendications

1. Dispositif de mesure destiné à mesurer un paramètre géométrique, en particulier un diamètre intérieur et/ou extérieur et/ou une épaisseur de paroi, d'un objet (24) plat ou filiforme, en particulier tubulaire, comportant un émetteur-récepteur (10) doté d'un moyen d'émission destiné à émettre un rayonnement térahertz vers l'objet, dans lequel le rayonnement térahertz est au moins partiellement réfléchi par l'objet (24), et doté d'un moyen de réception destiné à recevoir le rayonnement térahertz émis vers l'objet (24) par le moyen d'émission, dans lequel le dispositif de mesure est un dispositif de mesure portable par un opérateur,
**caractérisé en ce que** le dispositif de mesure présente un support (14, 30, 34), lequel supporte d'une part l'émetteur-récepteur (10) et d'autre part un réflecteur (16, 32) destiné à réfléchir le rayonnement térahertz émis par le moyen d'émission après irradiation d'au moins une section de l'objet (24), dans lequel le support (14, 30, 34) est conçu de manière à ce que le dispositif de mesure puisse être placé de telle façon sur l'objet (24) pour mesurer le paramètre géométrique de l'objet (24) que l'émetteur-récepteur (10) et le réflecteur (16, 32) se font face sur des côtés distincts de l'objet (24) ou d'une paroi de l'objet (24).

2. Dispositif de mesure selon l'une des revendications précédentes, **caractérisé en ce que** le support (14, 30, 34) est conçu en forme de C.

3. Dispositif de mesure selon l'une des revendications précédentes, **caractérisé en ce que** le support (14, 30, 34) forme une butée, laquelle peut être placée sur un côté frontal de l'objet (24) pour le placement du dispositif de mesure.

4. Dispositif de mesure selon l'une des revendications précédentes, **caractérisé en ce que** l'émetteur-récepteur (10) et/ou le réflecteur (16, 32) sont montés de façon déplaçable longitudinalement sur le support (14, 30, 34).

5. Dispositif de mesure selon l'une des revendications précédentes, **caractérisé en ce que** l'émetteur-récepteur (10) et/ou le réflecteur (16, 32) sont disposés de façon amovible sur le support (14, 30, 34).

6. Dispositif de mesure selon l'une des revendications précédentes, **caractérisé en ce que** dans l'état du dispositif de mesure placé sur l'objet (24), le réflecteur (16, 32) est espacé d'une paroi de l'objet (24) irradiée par le rayonnement térahertz, adjacente au réflecteur (16, 32).

7. Dispositif de mesure selon l'une des revendications précédentes, **caractérisé en ce que** le support (14, 30, 34) comporte au moins un appui, avec lequel l'émetteur-récepteur (10) et/ou le réflecteur (16, 32) dans l'état placé sur l'objet (24) reposent sur une surface de l'objet (24).

8. Dispositif de mesure selon la revendication 7, **caractérisé en ce que** l'au moins un appui comporte au moins un rouleau de guidage (18, 20) reposant sur la surface de l'objet (24) dans l'état placé sur l'objet (24).

9. Dispositif de mesure selon l'une des revendications 7 ou 8, **caractérisé en ce que** l'au moins un appui peut être réglé de manière à s'adapter à différentes dimensions de l'objet (24).

10. Dispositif de mesure selon la revendication 9, **caractérisé en ce que** l'au moins un appui comporte au moins deux sections d'appui espacées l'une de l'autre, lesquelles peuvent être écartées à l'encontre d'une précontrainte.

11. Dispositif de mesure selon l'une des revendications précédentes, **caractérisé en ce qu'**il est également prévu au moins un capteur, avec lequel le dispositif de mesure peut être orienté avec le support (14, 30, 34) sans contact avec l'objet (24) pour une opération de mesure.

12. Dispositif de mesure selon la revendication 11, **caractérisé en ce que** l'au moins un capteur comporte au moins un capteur optique et/ou au moins un capteur inertiel et/ou au moins un capteur de position.

13. Dispositif de mesure selon l'une des revendications précédentes, **caractérisé en ce que** le réflecteur (16, 32) présente la forme d'une section de cylindre.

14. Dispositif de mesure selon l'une des revendications précédentes, **caractérisé en ce que** le réflecteur (16, 32) est partiellement transparent au rayonnement térahertz émis par le moyen d'émission.

15. Dispositif de mesure selon l'une des revendications précédentes, **caractérisé en ce que** celui-ci comporte en outre une section de maintien (42) apte à être disposée de façon stationnaire sur un moyen de fabrication destiné à la fabrication de l'objet, à laquelle l'émetteur-récepteur (10) et/ou le support (14, 30, 34) peuvent être fixés de façon amovible.

16. Dispositif de mesure selon l'une des revendications précédentes, **caractérisé en ce que** celui-ci comporte en outre un moyen d'évaluation (26), lequel est conçu pour déterminer un paramètre géométrique, en particulier une épaisseur de paroi et/ou un diamètre intérieur et/ou extérieur de l'objet (24), sur la base de valeurs de mesure reçues par le moyen de réception.

17. Dispositif de mesure selon la revendication 16, **caractérisé en ce que** le moyen d'évaluation (26) est en outre conçu pour déterminer l'indice de réfraction de l'objet (24) à partir d'une comparaison du temps de propagation du rayonnement térahertz émis par le moyen d'émission et reçu par le moyen de réception lors de l'irradiation de l'objet (24) avec le temps de propagation du rayonnement térahertz émis par le moyen d'émission et reçu par le moyen de réception sans irradiation de l'objet (24).

18. Dispositif de mesure selon l'une des revendications précédentes, **caractérisé en ce que** le dispositif de mesure comporte un moyen d'émission sans fil destiné à envoyer des valeurs de mesure enregistrées par le moyen de réception à un moyen d'évaluation (26) séparé du dispositif de mesure et/ou à envoyer des données évaluées par un moyen d'évaluation (26) intégré au dispositif de mesure à un moyen de commande séparé du dispositif de mesure.

19. Système comportant un dispositif de mesure selon l'une des revendications précédentes et l'objet (24).

20. Système selon la revendication 19, **caractérisé en ce que** celui-ci comporte en outre un moyen de transport destiné à transporter l'objet (24) dans la direction longitudinale à travers une zone de mesure du dispositif de mesure.

21. Procédé de mesure d'un paramètre géométrique, en particulier d'un diamètre intérieur et/ou extérieur et/ou d'une épaisseur de paroi d'un objet (24) plat ou filiforme, en particulier tubulaire, à l'aide d'un dispositif de mesure selon l'une des revendications 1 à 18 ou à l'aide d'un système selon l'une des revendications 19 ou 20.
